# EUROPEAN PATENT APPLICATION

(11) **EP 4 184 435 A1**
(43) Date of publication of application: **24.05.2023**
(21) Application number: 21210031.7
(22) Date of filing: 23.11.2021
(51) Int. Cl.: G06T 7/149, G06T 7/12, G06T 7/11

(54) **METHOD AND SYSTEMS FOR BOUNDARY DETECTION**

(71) Applicant: Koninklijke Philips N.V., 5656 AG Eindhoven (NL)
(72) Inventor: WAECHTER-STEHLE, Irina, Eindhoven (NL); FLAESCHNER, Nick, Eindhoven (NL); GROTH, Alexandra, Eindhoven (NL); WEESE, Rolf, Jürgen, Eindhoven (NL)
(74) Representative: Philips Intellectual Property & Standards

(57) **Abstract**

According to an aspect, there is provided a computer implemented method for boundary detection of an object of interest in an image, the method comprising: for a volume of the image corresponding to a portion of a three-dimensional, 3D, mesh, representing the object of interest, predicting, by a regression network, at least one predicted distance from the portion of the 3D mesh to a boundary of the object of interest in the image, the at least one predicted distance corresponding to a class (202); and determining a distance of the portion of the 3D mesh to the boundary based on at least one probability of the volume corresponding to a class and the at least one predicted distance (204).

## Description

### FIELD OF THE INVENTION

Embodiments herein relate to detecting boundaries of objects in images.

### BACKGROUND OF THE INVENTION

The disclosures herein may be applied to a diverse range of images, such as for example, medical images. Image segmentation involves extracting shape/form information about the objects or shapes captured in an image. This may be achieved by converting the image into constituent blocks or "segments" that represent the different objects, or features, in the image. In some methods, image segmentation may comprise fitting a model to one or more objects in an image.

One method of image segmentation is Model-Based Segmentation (MBS), whereby a polygonal (e.g. triangulated) mesh of a target structure (such as, for example, a heart, brain, lung etc.) is adapted in an iterative fashion to objects in an image. Segmentation models typically encode population-based appearance objects and shape information. Such information describes permitted shape variations based on real-life shapes of the target structure in members of the population. Shape variations may be encoded, for example, in the form of Eigenmodes which describe the manner in which changes to one part of a model are constrained by, or dependent on, the shapes of other parts of a model. Thus, model-based segmentation uses boundary detectors to adapt a shape model to a medical image. These boundary detectors are trained on images with reference segmentations using e.g. deep learning.

Model-based segmentation has been used in various applications to segment one or multiple target organs from medical images - see, for example, the paper by Ecabert, O., et al. 2008 entitled "Automatic Model-Based Segmentation of the Heart in CT Images"; IEEE Trans. Med. Imaging 27 (9), 1189-1201. The use of polygonal (e.g. triangulated) surface meshes has led to MBS generally providing smooth segmentation results. Furthermore, MBS is generally considered to be robust against image artifacts, such as variations in image quality.

### SUMMARY OF THE INVENTION

Boundary detection using model-based segmentation is effective as long as the boundary properties at corresponding anatomical positions are consistent between different individuals. Some tissue related pathologies can, however, lead to local contrast changes, i.e.: a scar in cardiac MR, calcifications in CT images or pericardial effusion in cardiac ultrasound. Due to the difference in tissue properties, it may be more difficult to detect a boundary of an object of interest in an image and therefore the segmentation result can be inaccurate for images with tissue related pathologies. It is desirable to avoid such segmentation inaccuracies and to accurately segment the anatomy in the presence of such pathologies.

According to an aspect, there is provided a computer implemented method for boundary detection of an object of interest in an image, the method comprising: for a volume of the image corresponding to a portion of a three-dimensional, 3D, mesh, representing the object of interest, predicting, by a regression network, at least one predicted distance from the portion of the 3D mesh to a boundary of the object of interest in the image, the at least one predicted distance corresponding to a class; and determining a distance of the portion of the 3D mesh to the boundary based on the at least one probability of the volume corresponding to a class and the at least one predicted distance. The method may further comprise determining, by a classification network, at least one probability of the volume corresponding to a class, and wherein the distance of the portion of the 3D mesh to the boundary is determined based on the at least one probability determined by the classification network. The classification network and the regression network may be comprised in the same network, or may be separate networks.

The class may correspond to a property of tissue. For example, the class may indicate whether the volume comprises tissue with a tissue related pathology. Thus, the detection of a boundary involves classifying the tissue proximate to a boundary of the 3D mesh, and combining the classification with the boundary detection in order to more accurately detect boundaries of tissue even in the presence of tissue related pathologies. The method may allow construction of robust and accurate segmentation algorithms for organs with stable anatomy in the presence of tissue related pathologies as required for computed tomography, CT, magnetic resonance, MR, and ultrasound, US, systems, clinical workstations, Radiology, Oncology and Cardiology solutions.

In more detail, the image (e.g. the image that is to be segmented) may be any type of image. In some embodiments, the image may comprise a scientific image. In some embodiments, for example, the image may comprise a medical image.

A medical image may comprise an image acquired using any imaging modality. Examples of a medical image include, but are not limited to, a computed tomography (CT) image (for example, from a CT scan) such as a C-arm CT image, a spectral CT image or a phase contrast CT Image, an x-ray image (for example, from an x-ray scan), a magnetic resonance (MR) image (for example, from an MR scan), an ultrasound (US) image (for example, from an ultrasound scan), fluoroscopy images, nuclear medicine images, or any other three dimensional medical image.

More generally, the image may comprise an image captured using a charged coupled device CCD, such as that in a camera. The skilled person will appreciate that embodiments herein may be applied to other types of images and/or other data sets that may be segmented.

Generally the image may comprise a two dimensional image or a three dimensional image. The image may comprise a plurality (or set) of image components. For example, in embodiments where the image comprises a two dimensional image, the image components may comprise pixels. In embodiments where the image comprises a three dimensional image, the three dimensional image, the image components may comprise voxels.

The object of interest in the image may comprise any feature, object (e.g. real or simulated), shape or part of an object or shape thereof that is visible (e.g. discernable) in the image. In embodiments where the image comprises a medical image, the feature may comprise an anatomical feature, or portion thereof, such as part of a lung, heart, brain, or any other anatomical feature. The object of interest in the image may be, for example, an organ (such as the heart or prostate).

According to an aspect, there is provided a method of training a classification network for use in determining at least one probability of a volume of an image corresponding to a class, the method comprising: providing training data to the network, the training data comprising: i) example images comprising at least one volume; and ii) for each example image, training labels indicating a classification of each volume; and training the network to determine at least one probability of a volume corresponding to a class.

According to an aspect, there is provided a method of training a regression network for use in predicting a distance from a portion of a 3D mesh to a boundary of an object of interest in an image, the distance corresponding to a class, the method comprising: training the regression network in parallel with a classification network, wherein the classification network is trained to determine at least one probability of a volume of an image corresponding to a class, and wherein the regression network and the classification network share weights.

According to an aspect, there is provided a computer program product comprising a computer readable medium, the computer readable medium having computer readable code embodied therein, the computer readable code being configured such that, on execution by a suitable computer or processor, the computer or processor is caused to perform the methods described herein.

According to an aspect, there is provided a system for boundary detection of an object of interest in an image, the system comprising: a memory comprising instruction data representing a set of instructions; and a processor configured to communicate with the memory and to execute the set of instructions, wherein the set of instructions, when executed by the processor, cause the processor to: for a volume of the image corresponding to a portion of a three-dimensional, 3D, mesh, representing the object of interest, predict, by a regression network, at least one predicted distance from the portion of the 3D mesh to a boundary of the object of interest in the image, the at least one predicted distance corresponding to a class; and determine a distance of the portion of the 3D mesh to the boundary based on the at least one probability of the volume corresponding to a class and the at least one predicted distance.

These and other aspects will be apparent from and elucidated with reference to the embodiment(s) described hereinafter.

### BRIEF DESCRIPTION OF THE DRAWINGS

Example embodiments will now be described, by way of example only, with reference to the following drawings, in which:
Fig. 1 is a diagram illustrating an apparatus according to an example;
Fig. 2 is a diagram illustrating a method according to an example;

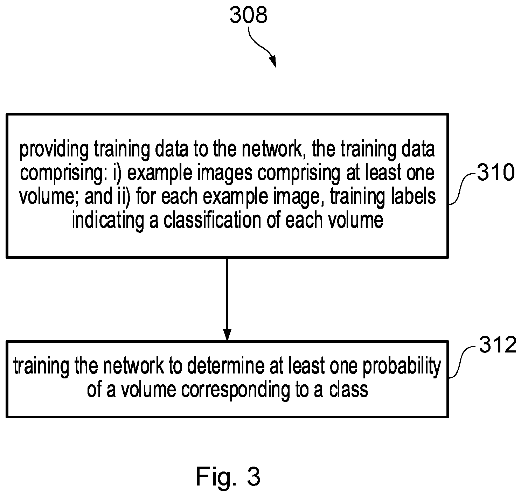

Fig. 3 is a diagram illustrating a method according to an example;

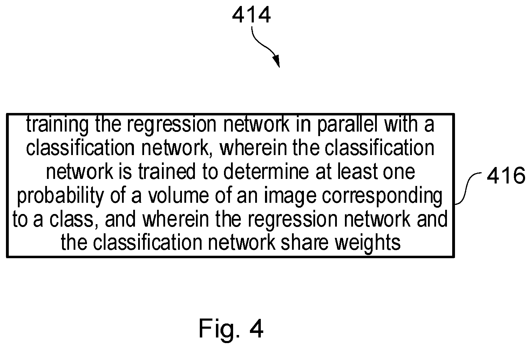

Fig. 4 is a diagram illustrating a method according to an example;
Fig. 5 is a diagram illustrating the process according to an example to detect a boundary of an object of interest in an image;
Fig. 6 is a diagram illustrating a network according to an example;
Fig. 7 is a diagram illustrating a network according to an example;
Fig. 8 is a diagram illustrating a network according to an example; and
Fig. 9 is a diagram illustrating examples herein applied to an image to detect a boundary.

### DETAILED DESCRIPTION OF EMBODIMENTS

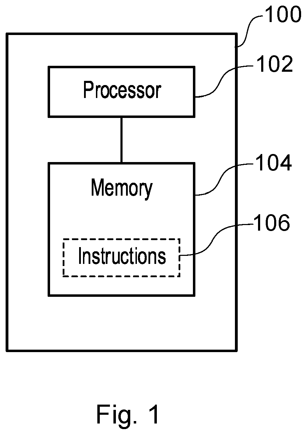

Turning now to Fig. 1 in some embodiments there is an apparatus 100 for use in boundary detection of an object of interest in an image, according to some embodiments herein. Generally, the apparatus may form part of a computer apparatus or system e.g. such as a laptop, desktop computer or other computing device. In some embodiments, the apparatus 100 may form part of a distributed computing arrangement or the cloud.

The apparatus comprises a memory 104 comprising instruction data representing a set of instructions and a processor 102 (e.g. processing circuitry or logic) configured to communicate with the memory and to execute the set of instructions. Generally, the set of instructions, when executed by the processor, may cause the processor to perform any of the embodiments of the methods as described below.

Embodiments of the apparatus 100 may be for use in boundary detection of an object of interest in an image, the system comprising a memory comprising instruction data representing a set of instructions; and a processor configured to communicate with the memory and to execute the set of instructions. More specifically, the set of instructions, when executed by the processor, cause the processor to: for a volume of the image corresponding to a portion of a three-dimensional, 3D, mesh, representing the object of interest; predict, by a regression network, at least one predicted distance from the portion of the 3D mesh to a boundary of the object of interest in the image, the at least one predicted distance corresponding to a class; and determine a distance of the portion of the 3D mesh to the boundary based on at least one probability of the volume corresponding to a class and the at least one predicted distance. The processor may further determine, by a classification network, at least one probability of the volume corresponding to a class, and wherein the distance of the portion of the 3D mesh to the boundary is determined based on the at least one probability. The processor may also be configured to train the network, classification network and/or regression network using any of the methods described herein.

The processor 102 can comprise one or more processors, processing units, multi-core processors or modules that are configured or programmed to control the apparatus 100 in the manner described herein. In particular implementations, the processor 102 can comprise a plurality of software and/or hardware modules that are each configured to perform, or are for performing, individual or multiple steps of the method described herein. The processor 102 can comprise one or more processors, processing units, multi-core processors and/or modules that are configured or programmed to control the apparatus 100 in the manner described herein. In some implementations, for example, the processor 102 may comprise a plurality of (for example, interoperated) processors, processing units, multi-core processors and/or modules configured for distributed processing. It will be appreciated by a person skilled in the art that such processors, processing units, multi-core processors and/or modules may be located in different locations and may perform different steps and/or different parts of a single step of the method described herein.

The memory 104 is configured to store program code that can be executed by the processor 102 to perform the method described herein. Alternatively or in addition, one or more memories 104 may be external to (i.e. separate to or remote from) the apparatus 100. For example, one or more memories 104 may be part of another device. Memory 104 can be used to store the images, volumes of images, the 3D mesh, classes, probabilities and/or any other information or data received, calculated or determined by the processor 102 of the apparatus 100 or from any interfaces, memories or devices that are external to the apparatus 100. The processor 102 may be configured to control the memory 104 to store the images, volumes of images, the 3D mesh, classes, probabilities and/or any other information or data received, calculated or determined by the processor.

In some embodiments, the memory 104 may comprise a plurality of sub-memories, each sub-memory being capable of storing a piece of instruction data. For example, at least one sub-memory may store instruction data representing at least one instruction of the set of instructions, while at least one other sub-memory may store instruction data representing at least one other instruction of the set of instructions.

It will be appreciated that Fig. 1 only shows the components required to illustrate this aspect of the disclosure and, in a practical implementation, the apparatus 100 may comprise additional components to those shown. For example, the apparatus 100 may further comprise a display. A display may comprise, for example, a computer screen, and/or a screen on a mobile phone or tablet. The apparatus may further comprise a user input device, such as a keyboard, mouse or other input device that enables a user to interact with the apparatus, for example, to provide initial input parameters to be used in the method described herein. The apparatus 100 may comprise a battery or other power supply for powering the apparatus 100 or means for connecting the apparatus 100 to a mains power supply.

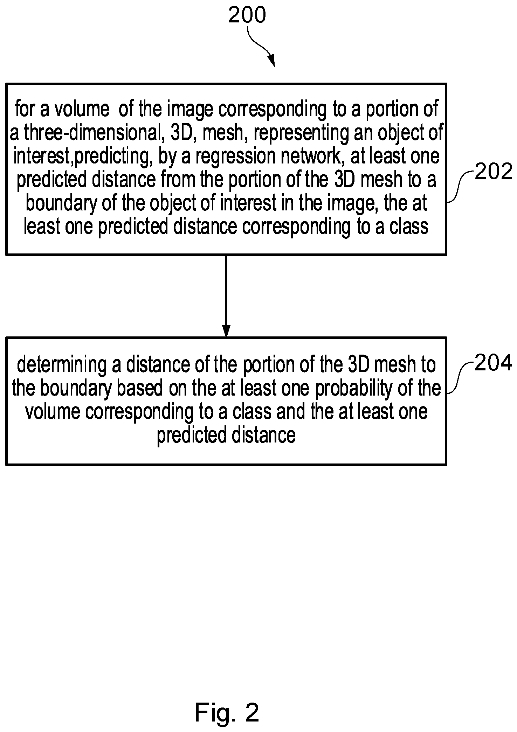

Turning to Fig. 2, there is a computer implemented method 200 for use in boundary detection of an object of interest in an image. Embodiments of the method 200 may be performed, for example by an apparatus such as the apparatus 100 described above.

Briefly, in a first step 202, the method 200 comprises: for a volume of the image corresponding to a portion of a three-dimensional, 3D, mesh, representing the object of interest, predicting, by a regression network, at least one predicted distance from the portion of the 3D mesh to a boundary of the object of interest in the image, the at least one predicted distance corresponding to a class. In a second step 204, the method further comprises determining a distance of the portion of the 3D mesh to the boundary based on the at least one probability of the volume corresponding to a class and the at least one predicted distance.

The class may correspond to at least one property of tissue. For example, the volume may comprise an image of tissue of a subject, and the class may correspond to a property of the tissue of the volume. The image may be a three dimensional, 3D, image. The 3D mesh may be defined by a plurality of polygons and the portion of the 3D mesh may correspond to a polygon of the 3D mesh. The polygons may be triangles. The method may further comprise adjusting the 3D mesh based on the determined distance. For example, the distance may indicate a distance of the current location of a portion of the 3D mesh to an actual (or more accurate) location of the boundary of the object of interest in an image (taking into account the classification of the tissue proximate to the boundary of the object of interest).

A predicted distance of the portion of the 3D mesh to the boundary may be predicted for each class of a plurality of classes, and the probability of the volume corresponding to each class of the plurality of classes may be determined. the determined distance of the portion of the 3D mesh to the boundary may be determined based on a sum for all classes of the predicted distance corresponding to a class multiplied by the probability of the volume corresponding to the class. Alternatively, the determined distance of the portion of the 3D mesh to the boundary may be the distance corresponding to a class for which the determined probability of the volume corresponding to the class is the highest.

The method may be performed for each volume corresponding to each of a plurality of portions of the 3D mesh. Thus, a distance may be determined for each portion of the 3D mesh. The 3D mesh may be adapted based on the at least one distance to better conform to the boundary of an object of interest in an image.

The method may further comprise assigning a label corresponding to a class (such as indicating the class or information relating to the class) to the portion of the 3D mesh and/or the volume based on at least one probability of the volume corresponding to a class (for example, the label/class may be assigned to the portion of the 3D mesh corresponding to the volume). Thus, a label indicating the class may be assigned to a portion of the 3D mesh. The label may be used for visualisation and/or further processing. For example, labels for a plurality of portions of the 3D mesh may be used in conjunction with the 3D mesh to illustrate regions belonging to particular classes (such as tissue pathologies). For example, each class may be visualised by a different colour of triangle (portion) of the 3D mesh, or a particular class or classes may be shown in colour. Thus, the resulting 3D mesh may (visually) indicate the existence and/or location of particular types of tissue, such as abnormal tissue. The class assigned to the portion of the 3D mesh and/or the volume may be used for additional processing, such as to output an indication that abnormal tissue is present in the image, and/or a type of abnormal tissue, an amount of abnormal tissue and so on.

The regression network (which predicts an output variable as a function of the inputs) may comprise a layer comprising a portion specific weighting for each class, and the regression network may be configured to output one distance per class for each of the plurality of portions of the 3D mesh. Alternatively, the regression network may comprise a layer comprising one convolutional kernel per class, and the regression network may be configured to output one distance per class for each of the plurality of portions of the 3D mesh.

A portion of the classification network (for example, a network that selects a category based on which output response has the highest output value) may be shared with the regression network. For example, a (or at least one) CBR block ( a block comprising a convolutional layer, a batch normalization layer (BN-L) and ReLU layer (rectified linear unit), or a block comprising a series of a convolutional layer, normalization and activation function) may be shared between the classification network and the regression network. Thus, the classification network may influence the output of the regression network so that a boundary may be more accurately determined.

There is also provided a method for training the classification network and a method for training the regression network.

In particular, there is provided a method 308 of training a classification network for use in determining at least one probability of a volume of an image corresponding to a class. In a first step 310 the method comprises: providing training data to the network, the training data comprising: i) example images comprising at least one volume; and ii) for each example image, training labels indicating a classification of each volume. In a second step 312 the method comprises training the network to determine at least one probability of a volume corresponding to a class.

There is also provided a method 414 of training a regression network for use in predicting a distance from a portion of a 3D mesh to a boundary of an object of interest in an image, the distance corresponding to a class. In a first step 416 the method comprises training the regression network in parallel with a classification network, wherein the classification network is trained to determine at least one probability of a volume of an image corresponding to a class, and wherein the regression network and the classification network share weights (e.g. share layers). Thus, the regression network is trained based on the weights of a classification network, and therefore the output of the regression network depends on a classification of the volume. Alternatively, the classification may be trained first, and the regression network trained using the weights obtained from the training of the classification network.

Thus, the boundary detector (e.g. regression network) is combined, or extended, with a classifier (classification network). To train the network(s), the training input (image and reference surface meshes) may be extended with labels that indicate whether the portion (triangle) is part of a normal or a diseased region. Neural network-based boundary detectors may be trained using multi-task learning (e.g. parallel training with shared weights) with one task estimating the distance to the desired boundary and the other one classifying the triangle's tissue properties. To generate sufficient training data, different distributions of diseased tissues together with the proper labels may be simulated and used to modify training images. During application of the model-based segmentation, the neural network may provide the distance to the desired boundary together with a label regarding the tissue properties. The resulting classification per triangle can be used for visualization or as input for further processing (e.g. seed point definition and threshold estimation for calcification quantification).

In an example of model-based segmentation using neural network-based boundary detection, a three dimensional, 3D, model of an object of interest comprised of a plurality of polygons (in particular, triangles) is adapted to correspond with the feature as it is shown in an image. In order to adapt the 3D model, elongated image volumes are extracted for each triangle (e.g. at the centre of a portion of the 3D mesh and extending in a direction normal to the portion) and a neural network is used to predict the distance of the actual triangle position to the desired boundary (see Fig . 5 for illustration). T. Brosch, J. Peters, A. Groth, T. Stehle, J. Weese, "Deep Learning-Based Boundary Detection for Model-Based Segmentation with Application to MR Prostate Segmentation", MICCAI 2018, LNCS 11073, 515-522, discloses an example of such a method. The method may be a NN-based method that directly detects image boundaries and formulates boundary detection as a regression task. In particular, the method may comprise extracting image volumes centred at the triangle centres of a mesh model. The volumes are elongated in the direction normal to the triangle. A CNN is used to predict the distance to the proper image boundary on the basis of these volumes. During learning, triangles of the reference meshes in the reference images are displaced and the CNN is trained to predict the distance between a displaced triangle and the correct boundary. Such a method is described in T. Brosch, J. Peters, A. Groth, F. Weber, J. Weese, "Model-based segmentation using neural network-based boundary detectors: Application to prostate and heart segmentation in MR images", Machine Learning with Applications Volume 6, 15 December 2021, 100078.

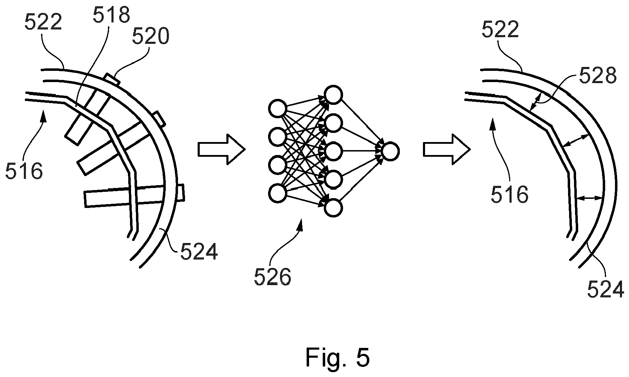

Fig. 5 illustrates the process according to an example to detect a boundary of an object of interest in an image. In particular, Fig. 5 illustrates a two dimensional (2D) representation of this process. The 3D mesh 516 is made up of, or comprises, a plurality of portions 518 (in this case triangles), where as is shown in this Fig., a volume 520 of the image corresponding to the triangle is extracted. The volume may comprise preset dimensions. The volume extends in a direction normal to the surface of the triangle from a central portion of the triangle (in this example, away from the centre of the 3D mesh but it will be appreciated that the volume could extend in a direction towards the centre of the 3D mesh alternatively or in addition). In this example, the volume intersects a first boundary 522 which represents a distorted boundary of the object of interest (distorted due to, e.g. scar tissue), and a second boundary 524 which represents the (actual) boundary of the object of interest. The volume is input to a neural network 526. The neural network 526 determines, in a classification network, a probability of the volume corresponding to a class. The network also predicts at least one distance from the portion of the 3D mesh to a boundary of the object of interest in the image, the at least one predicted distance corresponding to a class. The distance 528 of the triangle (e.g. portion) of the 3D mesh 516 to the (non-distorted) boundary 524 is determined based on the probability (of the volume corresponding to a class) and the at least one predicted distance. For example, a distance may be predicted per class, and the distance corresponding to the class with the highest probability may be selected as the distance to the boundary (e.g. a point on the boundary).

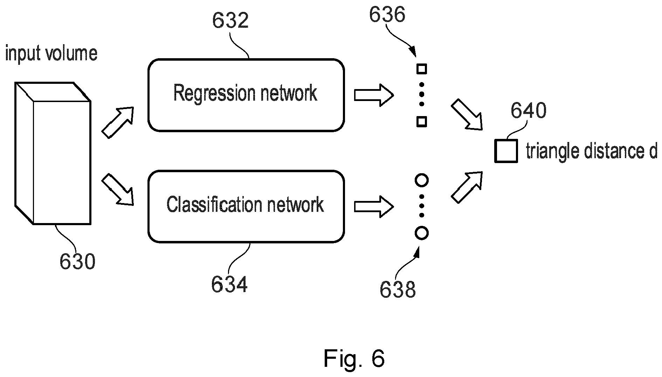

According to an example, in model-based segmentation, a network (e.g. regression network) which predicts the distance d of the triangle to the anatomical boundary (within a three dimensional volume V) is combined with the output of a classification network which assigns a class C (e.g. healthy tissue / scar tissue) to the volume V such that the predicted distance d depends on the predicted class C. This configuration is illustrated in Fig. 6.

In particular, Fig. 6 illustrates an example of a volume 630 which is input to a regression network 632 and to a classification network 634. The regression network 632 predicts a plurality of distances 636 (N predicted distances - d(C)) of the triangle to which the volume corresponds to a boundary of an object of interest. A distance 636 may be predicted for each class. The classification network predicts a probability 638 of the volume corresponding to each class (N class probabilities p(C)). The probabilities and the plurality of distances are then used to determine the distance 640 of the triangle to the boundary. It will be appreciated that this may be performed for each portion of the 3D mesh (e.g. each volume corresponding to portions of the 3D mesh).

Thus, in one example, the regression network and the classification networks each have N outputs, with N being the number of classes. For each class C, the regression network predicts a distance d(C) and the classification network predicts a class probability p(C). In one example, the predicted distance of the triangle to the anatomical boundary is determined based on a sum for all classes of the predicted distance corresponding to a class multiplied by the probability of the volume corresponding to the class, given by _{sumclasses}(d(C) ^{∗} p(C)) where _{sumclasses}(p(C)) = 1 (as enforced by, e.g., using a softmax as activation function after the last layer of the classification network).

In another example, the distance of the triangle to the boundary of the object of interest is the distance corresponding to a class for which the determined probability of the volume corresponding to the class is the highest, given by d(maxC) with maxC = argmax (p(C)).

In one example, the regression network and the classification network are convolutional neural networks.

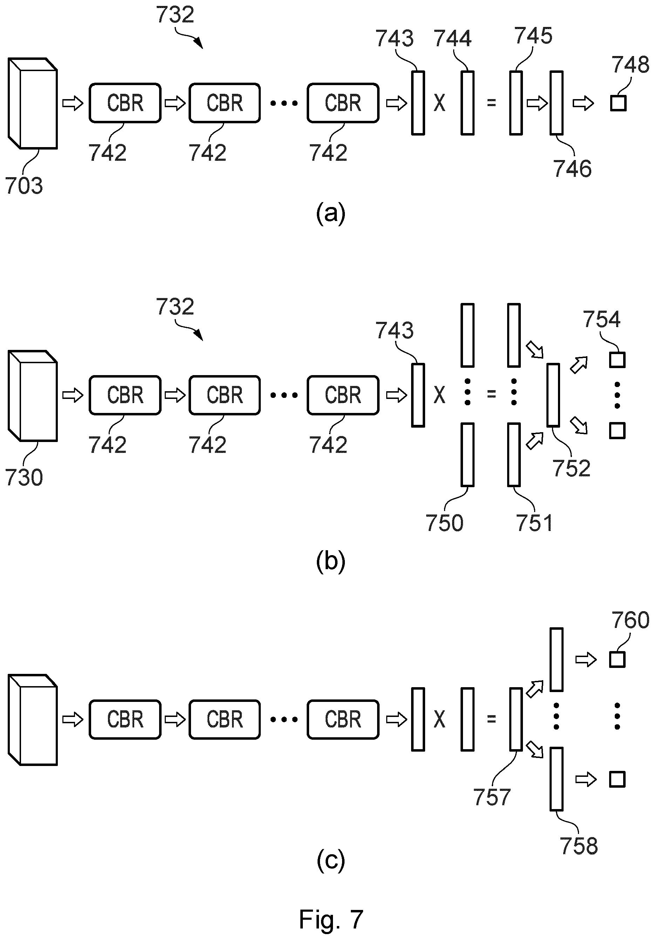

The architecture of the regression network may be as described herein. As in T. Brosch, J. Peters, A. Groth, T. Stehle, J. Weese, "Deep Learning-Based Boundary Detection for Model-Based Segmentation with Application to MR Prostate Segmentation", MICCAI 2018, LNCS 11073, 515-522, the regression network may consist of a sequence of CBR blocks (convolution, batch normalization, ReLU activation function) subsequently reducing the volume dimension to TxlxF where T is the number of triangles and F is the number of feature maps which are the output of the last convolutional layer with F convolutional kernels. The output generated by a CBR layer applied to a volume is a "low level" feature, and the subsequent application of CBR blocks results in output of higher level features (as subsequent application of CBR blocks gives a greater context). The convolutional kernels are shared among all triangles. Then, a feature map selection layer, which enables a triangle specific weighting of the features, follows. In Brosch et al, the feature map selection layer comprises T vectors of size 1xF (one vector per triangle) which is multiplied element-wise and per triangle with the output of the last convolutional layer, yielding an output of size TxlxF. Then, a last convolutional layer with kernel size 1xF (again shared among all triangles) follows, whose output is the distance prediction per triangle (dim = Tx1). This configuration is illustrated in Fig. 7a.

Fig. 7a illustrates network architectures for boundary detection. In particular, Fig. 7a illustrates a volume 730 which is input to a regression network 732. The regression network 732 comprises a plurality of CBR blocks 742 which process the input volume 730. The output of the CBR blocks 743 (features) is processed by a triangle specific layer (feature map selection layer 744), where the output from the feature map selection layer 745 is processed by a convolutional layer 746 with a kernel shared amongst all triangles. With the "triangle specific feature layer", the regression network predicting the distance of a triangle to the desired boundary can be different for different triangles (i.e. the distance depends on the sub-volume and the triangle number, as opposed to just the sub-volume in a case where the triangle specific layer were not present). The triangle specific layer comprises a multiplication with one vector per triangle, e.g. in contrast to a multiplication by one vector which is the same for all triangles. This may be different from the rest of the network architecture where, for example, 32 convolutional kernels may be learnt per layer but these are used for all triangles, i.e. all triangles share the same kernels. If there is more data there may be, for example, one set of kernels per triangle. The output of the network is a distance 748. Where a plurality of volumes corresponding to a plurality of triangles are processed by the network, the output is a distance per triangle.

In an example, the aforementioned process is altered to additionally consider the classification of the volume. In particular, the process is altered as follows: in the feature map selection layer, N vectors of size 1xF are learnt per triangle such that for each class C one feature map selection vector per triangle is learnt and the output is of size TxNxF. Then, as in Brosch et al, a last convolutional layer with kernel size 1xF (again shared among all triangles) follows, whose output is now (per triangle) N distance predictions, one distance d(C) per class C (dim = TxN). This configuration is illustrated in Fig. 7b.

In particular, Fig. 7b illustrates network architectures for boundary detection for several classes. In particular, Fig. 7a illustrates a volume 730 which is input to a regression network 732. The regression network 732 comprises a plurality of CBR blocks 742 which process the input volume 730. The output of the CBR blocks 743 is processed by a triangle specific layer (feature map selection layer 750). However, in the feature map selection layer 750, a triangle specific feature weighting (vector) is provided per class. The output from the feature map selection layer 751 is processed by a convolutional layer 752 with a kernel shared amongst all triangles. The output of the network is a distance 754 prediction per triangle per class.

In another example, the triangle selection layer is the same as in 7a. However, in contrast to Fig. 7a, the last convolutional layer has N kernels (one per class) of size 1xF such that the output consists of N distance predictions. This configuration is illustrated in Fig. 7c.

In particular, Fig. 7c illustrates network architectures for boundary detection for several classes, where the network is the same as described in relation to Fig. 7a up to the output from the feature map selection layer 745 and therefore will not be repeated for brevity. However, Fig. 7c illustrates that the output from the feature map selection layer 757 is processed by a convolutional layer 758 comprising a kernel for each class. The output of the network is a distance 760 per class. Where a plurality of volumes corresponding to a plurality of triangles are processed by the network, the output is a distance per triangle per class.

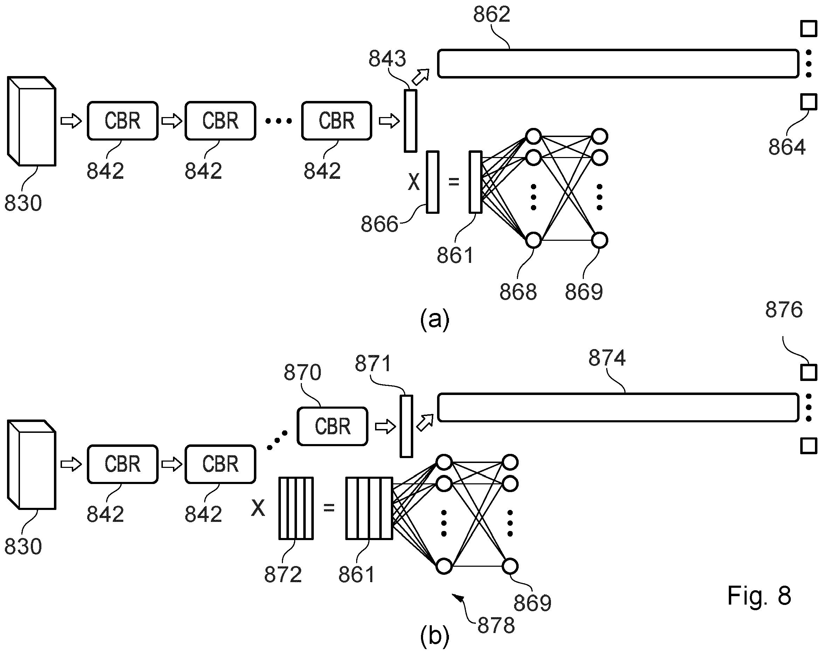

The architecture of the classification network may be as described herein. In one example, the classification network shares the CBR blocks with the regression network. In the feature map selection layer, an additional vector of size 1xF per triangle is learnt and as in the regression network multiplied element-wise with the output of the last CBR block. Then, a number (e.g. 2) of fully connected (FC) layers (incl. batch normalization and suitable activation function, e.g. ReLU for the hidden layers) follows with the last (output) layer having N neurons (one per class) whose outputs are the class probabilities p(C). The weights of the FC layers are shared among all triangles. The activation function of the last layer can, e.g., be the softmax function which enforces that sum(p(C))=1 and the training loss can then, e.g., be a cross-entropy loss. This configuration is illustrated in Fig. 8a.

Fig. 8a illustrates an example of network comprising a classification network which shares CBR blocks with a regression network. The CBR blocks 842 are the same as those illustrated in Fig. 7. As is shown in this example, a volume 830 is input to a series of shared CBR blocks 842. The output of the CBR blocks 843 is input both to the triangle specific regression part of the network 862 (which outputs N predicted distances d(C) 864) and to a triangle specific feature weighting (vector) layer 866. The output 861 of the feature weighting layer 866 is input to a series of fully connected (FC) layers 868 configured to output a probability of the volume corresponding to a class 869 (e.g. N predicted class probabilities p(C)).

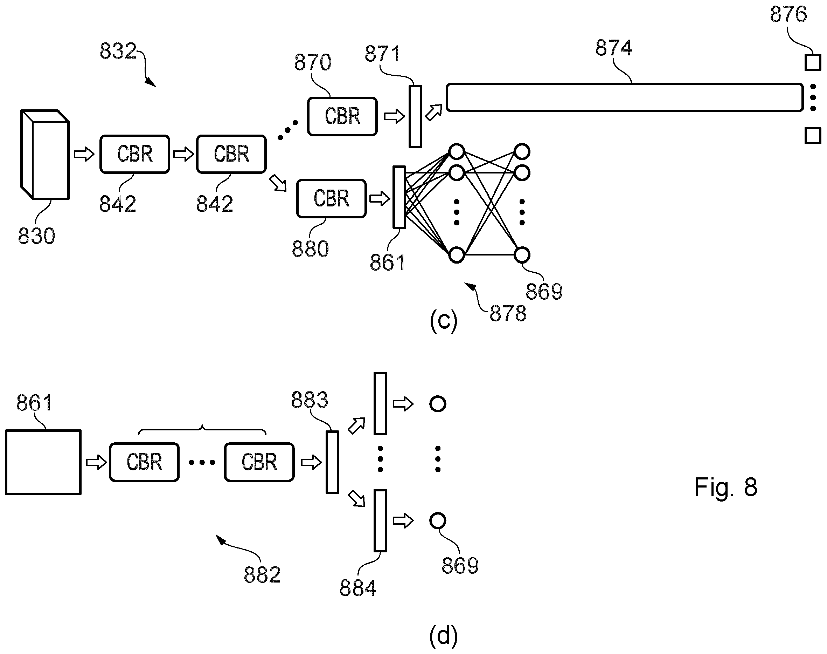

In another example, not all CBR blocks are shared with the regression network (e.g. a portion of the CBR blocks of the classification network are shared with the regression network) and the first "classification network exclusive" layer comprises a triangle specific weighting matrix (which is multiplied element-wise with the output of the last shared CBR block, see Fig. 8b) or a triangle specific convolutional layer (Fig. 8c).

Fig. 8b illustrates an example in which the CBR blocks are not all shared with the regression network. In particular, Fig. 8b illustrates a similar configuration to Fig. 8a. A volume 830 is input to a series of shared CBR blocks 842. However, after a first plurality of CBR blocks, the output is input to at least one further CBR block 870 as well as to a triangle specific feature weighting (matrix) layer 872 which is multiplied element-wise with the output of the last shared CBR block. The output of the further CBR block 871 is then input to a triangle specific regression part 874 of the network (which outputs N predicted distances 876 d(C)). The output of the triangle specific feature weighting (matrix) layer 861 is input to a series of fully connected layers 878 configured to output a probability of the volume corresponding to a class 869 (e.g. N predicted class probabilities p(C)).

Fig. 8c illustrates a further example in which the CBR blocks are not all shared with the regression network. Fig. 8c illustrates a similar configuration to Fig. 8b, in particular, a volume 830 is input to a series of shared CBR blocks 842. After a first plurality of CBR blocks, the output is input to at least one further CBR block 870 as well as to a triangle specific convolutional layer 880. The output of the further CBR block 871 is then input to a triangle specific regression part 874 of the network (which outputs N predicted distances 876 d(C)). The output of the triangle specific convolutional layer 861 is input to a series of fully connected (FC) layers 878 configured to output a probability of the volume corresponding to a class 869 (e.g. N predicted class probabilities p(C)).

In another example, the FC layers are replaced with convolutional layers with the last layer having N convolutional kernels (shown in Fig. 8d). Fig. 8d illustrates a further example in which the output 861 of a triangle specific layer of the classification network as described in relation to Figs. 8a, b or c is input to one or more CBR layers 882. The output of the CBR layers 883 is then input to N convolutional kernels 884 (one per class) configured to output a probability of the volume corresponding to a class 869 (e.g. N predicted class probabilities p(C)).

In another example, the regression part of the network stays as described in Brosch et al and illustrated in Fig. 7a (i.e. output is only one distance). The classification part of the network (which can be either convolutional or include a (or multiple) fully connected layer(s)) is directly connected to the triangle specific feature map selection layer 744, with N output nodes (probabilities for each classes). The outputs of the classification network and the regression network are not explicitly combined to predict the triangle distance. Instead, the classification network influences the regression network by way of the shared layers when both parts are trained simultaneously. In this way, the distance of the portion of the 3D mesh to the boundary is based on at least one probability of the volume corresponding to a class and the determined at least one predicted distance.

In another example, the entropy of the class prediction output can be used for estimating the uncertainty of the triangle distance prediction, which in turn can, in the MBS framework, be taken into account during the mesh adaptation (i.e. a triangle with a large uncertainty will have a low weight during the mesh adaptation).

In another example, the classification network and the regression network do not share any weights and only the outputs are combined (for example, as is illustrated in Fig 6).

The training of the network will now be described. In particular, there is provided a method of training a classification network for use in determining at least one probability of a volume of an image corresponding to a class, the method comprising: providing training data to the network, the training data comprising: i) example images comprising at least one volume; and ii) for each example image, training labels indicating a classification of each volume; and training the network to determine at least one probability of a volume corresponding to a class. There is also provided a method of training a regression network for use in predicting a distance from a portion of a 3D mesh to a boundary of an object of interest in an image, the distance corresponding to a class, the method comprising: training the regression network in parallel with a classification network, wherein the classification network is trained to determine at least one probability of a volume of an image corresponding to a class, and wherein the regression network and the classification network share weights.

I n a first example, training labels are available for the classification network. Thus, the classification network may be trained using volumes with labels indicating the class (of tissue) for each volume. In this case, the training loss for the classification network can, e.g., be a cross-entropy loss and the classification network can be trained independently.

In a configuration in which the classification network shares CBR layers with the regression network, after the classification network is trained, the regression network can be trained by keeping the weights of the shared CBR layers fixed such that only the remaining weights (in particular the triangle specific feature map selection weights and the weights of the last convolutional layer) are optimized. Then, the combined loss is of the form alpha ^{∗} classification loss + (1-alpha) ^{∗} regression loss where 0<alpha<1 is a tunable hyper parameter. The combined training may be initialized with pre-trained weights of the CBR blocks stemming from a prior classification training.

In a second example, training labels are not available for the classification network and only the number of desired classes is specified. In this example, the two networks may be trained simultaneously, where, as an example, a suitable training loss for the classification part would be the Shannon entropy such that unambiguous class assignments are rewarded.

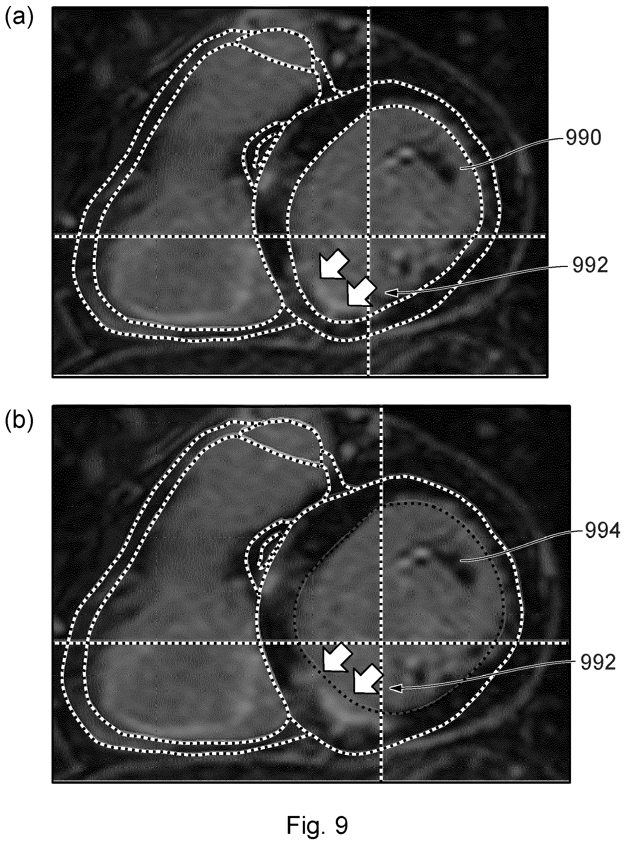

Fig. 9 illustrates boundary detection using conventional segmentation methods (a) and using the methods described herein (b). In particular, Fig. 9 illustrates segmentation of a cardiac MR image with scar tissue (the segmentation is illustrated as a two dimensional, 2D, representation of a 3D mesh). A boundary 990 of a 3D mesh determined using conventional methods is illustrated in Fig. 9a (the endocardial boundary), and includes the scar tissue in the bloodpool, where the scar tissue should instead be attributed to the left ventricular myocardium (actual boundary of the bloodpool indicated by arrows 992).

Using the methods described herein, the boundary of the object of interest can be more accurately determined. As is illustrated in Fig. 9b, where the boundary of the object of interest is detected using methods described herein, the detected boundary of the bloodpool 994 is more accurately determined (where the boundary of the bloodpool 994 is closer to the arrows 996 indicating the actual boundary of the bloodpool). In this example, the distance of a 3D mesh representing the bloodpool is determined by classifying the tissue corresponding to a portion of the 3D mesh. As the classification indicates the class of the tissue proximate to the 3D mesh, it can be determined that the tissue which looks as though it could belong to the bloodpool is actually scar tissue in the left ventricular myocardium. The adjustment of the 3D mesh therefore considers the classification of the tissue in addition to a likely boundary, and determines the distance of the portion of the 3D mesh to the boundary based on the classification (e.g. a probability of the volume corresponding to a class) and the predicted distance corresponding to that class. As can be seen in Fig. 9b, this results in a more accurate determination of the boundary of the bloodpool.

It will be appreciated that the tissue abnormality (e.g. the scar tissue) may be indicated on the 3D mesh (for example, may be indicated on the 2D representation of the 3D mesh). The indication may be based on the assignation of a class, or a label relating to the class, to the at least one of the portion of the 3D mesh and the volume based on the determined at least one probability of the volume corresponding to a class. For example, portions of the 3D mesh proximate to, or intercepting, abnormal tissue may be represented in a colour different to the rest of the 3D mesh, or may be indicated by a label, pointer or the like. This may be displayed on a display. A label relating to the class, or the class, may be assigned to the volume, and may be used to indicate that abnormal tissue is present in the proximity of the triangle (although not necessarily at the location of the triangle after deformation of the 3D mesh).

In another embodiment, there is provided a computer program product comprising a computer readable medium, the computer readable medium having computer readable code embodied therein, the computer readable code being configured such that, on execution by a suitable computer or processor, the computer or processor is caused to perform the method or methods described herein.

Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer implemented method for boundary detection of an object of interest in an image, the method comprising:
" for a volume of the image corresponding to a portion of a three-dimensional, 3D, mesh, representing the object of interest,
predicting, by a regression network, at least one predicted distance from the portion of the 3D mesh to a boundary of the object of interest in the image, the at least one predicted distance corresponding to a class; and
determining a distance of the portion of the 3D mesh to the boundary based on at least one probability of the volume corresponding to a class and the at least one predicted distance.

2. The computer implemented method as claimed in claim 1, wherein the method further comprises determining, by a classification network, at least one probability of the volume corresponding to a class, and wherein the distance of the portion of the 3D mesh to the boundary is determined based on the at least one probability determined by the classification network.

3. The computer implemented method as claimed in claim 1 or 2, wherein a class corresponds to at least one property of tissue.

4. The computer implemented method as claimed in any preceding claim, wherein the method further comprises adjusting the 3D mesh based on the determined distance.

5. The computer implemented method as claimed in any preceding claim, wherein the method further comprises assigning a label corresponding to a class to at least one of the portion of the 3D mesh and the volume based on at least one probability of the volume corresponding to a class.

6. The computer implemented method as claimed in any preceding claim, wherein a predicted distance of the portion of the 3D mesh to the boundary is predicted for each class of a plurality of classes, and the probability of the volume corresponding to each class of the plurality of classes is determined.

7. The computer implemented method as claimed in any preceding claim, wherein the determined distance of the portion of the 3D mesh to the boundary is determined based on a sum for all classes of the predicted distance corresponding to a class multiplied by the probability of the volume corresponding to the class; or wherein
the determined distance of the portion of the 3D mesh to the boundary is the distance corresponding to a class for which the determined probability of the volume corresponding to the class is the highest.

8. The computer implemented method as claimed in any preceding claim, wherein the method is performed for each volume corresponding to each of a plurality of portions of the 3D mesh.

9. The computer implemented method as claimed in claim 8, wherein
the regression network comprises a layer comprising a portion specific weighting for each class, and the regression network is configured to output one distance per class for each of the plurality of portions of the 3D mesh; or
wherein the regression network comprises a layer comprising one convolutional kernel per class, and the regression network is configured to output one distance per class for each of the plurality of portions of the 3D mesh.

10. The computer implemented method as claimed in any preceding claim, wherein a portion of a classification network is shared with the regression network.

11. The computer implemented method as claimed in any preceding claim, wherein the 3D mesh is defined by a plurality of polygons and the portion of the 3D mesh corresponds to a polygon of the 3D mesh.

12. A method of training a classification network for use in determining at least one probability of a volume of an image corresponding to a class, the method comprising:
providing training data to the network, the training data comprising: i) example images comprising at least one volume; and ii) for each example image, training labels indicating a classification of each volume; and
training the network to determine at least one probability of a volume corresponding to a class.

13. A method of training a regression network for use in predicting a distance from a portion of a 3D mesh to a boundary of an object of interest in an image, the distance corresponding to a class, the method comprising:
training the regression network in parallel with a classification network, wherein the classification network is trained to determine at least one probability of a volume of an image corresponding to a class, and wherein the regression network and the classification network share weights.

14. A computer program product comprising a computer readable medium, the computer readable medium having computer readable code embodied therein, the computer readable code being configured such that, on execution by a suitable computer or processor, the computer or processor is caused to perform the method as claimed in any one of claims 1 to 13.

15. A system for boundary detection of an object of interest in an image, the system comprising:
a memory comprising instruction data representing a set of instructions; and
a processor configured to communicate with the memory and to execute the set of instructions, wherein the set of instructions, when executed by the processor, cause the processor to:
for a volume of the image corresponding to a portion of a three-dimensional, 3D, mesh, representing the object of interest,
predict, by a regression network, at least one predicted distance from the portion of the 3D mesh to a boundary of the object of interest in the image, the at least one predicted distance corresponding to a class; and
determine a distance of the portion of the 3D mesh to the boundary based on at least one probability of the volume corresponding to a class and the at least one predicted distance.
